# DEMANDE DE BREVET EUROPEEN

(11) **EP 4 197 636 A1**
(43) Date de publication de la demande: **21.06.2023**
(21) Numéro de dépôt: 22211245.0
(22) Date de dépôt: 02.12.2022
(51) Int. Cl.: B01L 3/00, F16K 99/00

(54) **COMPOSANT FLUIDIQUE ET DISPOSITIF DE TYPE VANNE FLUIDIQUE POUR SCELLEMENT**

(30) Priorité: 17.12.2021 FR 2113753
(71) Demandeur: Commissariat à l'énergie atomique et aux énergies alternatives, 75015 Paris (FR)
(72) Inventeur: BLAIRE, Guillaume, 38054 Grenoble cedex 09 (FR); ALESSIO, Manuel, 38054 GRENOBLE cedex 09 (FR); BAQUE, Mélissa, 38054 Grenoble cedex 09 (FR); ROUX, Jean-Maxime, 38054 Grenoble cedex 09 (FR)
(74) Mandataire: INNOV-GROUP

(57) **Abrégé**

L'invention concerne un Composant (1) fluidique destiné à être associé à un module (M1) de chauffage et dans lequel est réalisé un circuit fluidique qui comporte un canal (360) fluidique destiné à faire circuler un fluide (F), ledit canal (360) fluidique comportant au moins un passage pour ledit fluide (F) et une partie évasée formant un emplacement réalisé en périphérie dudit passage, ledit composant comportant :
- Un mécanisme de vanne fluidique (330) comprenant au moins un élément d'actionnement capable de se dilater, piégé par au moins un corps (350) d'un composé fusible dans ledit emplacement.

## Description

### Domaine technique de l'invention

La présente invention se rapporte à un composant fluidique et à un dispositif de type vanne fluidique. Le dispositif peut notamment comporter une chambre de réaction pouvant être isolée par un mécanisme de vanne fluidique. L'invention concerne également un procédé d'analyse mis en œuvre dans ledit dispositif.

### Etat de la technique

Les dispositifs micro-fluidiques développés pour réaliser des analyses biologiques peuvent mettre en œuvre différents procédés dont les plus sensibles sont les procédés d'amplification biomoléculaire par lesquels une séquence génomique recherchée est répliquée en un très grand nombre d'exemplaires. Ce type de procédé est le plus sensible et le plus spécifique pour la recherche de microorganismes mais la réplication d'une séquence génomique en des millions d'exemplaires doit être accompagnée de mesures d'isolement très strict du volume réactionnel. Si une petite fraction d'un tel produit réactionnel était dispersée, il contaminerait son environnement et tous les tests de détection réalisés ultérieurement en cet endroit risqueraient d'être positifs. Dans les laboratoires sur puce développés pour des analyses biologiques par amplification biomoléculaire, il est donc important de disposer de moyens de scellement des chambres réactionnelles.

D'autres types de réactions peuvent également nécessiter l'isolation des produits de réaction au sein d'un microsystème comme par exemple les réactions mettant en œuvre des produits CMR, toxiques ou irritants.

Il est connu des documents US2012/064597A1, US2013/130262A1, US2007/166199A1 et US2006/076068A1 des dispositifs micro-fluidiques formés d'un réseau micro-fluidique de capsules micro-fluidiques et de canaux reliant les capsules entre elles. Chaque capsule micro-fluidique comporte une chambre dans laquelle débouche un canal d'entrée et dont ressort un canal de sortie. Une membrane déformable est commandée entre deux positions pour conférer deux états distincts à la capsule, un premier état dans lequel le canal d'entrée communique avec le canal de sortie via la chambre autorisant un transfert de fluide, et un deuxième état dans lequel la membrane bloque la communication entre les deux canaux, empêchant l'écoulement de fluide et le remplissage de la chambre de la capsule. La commande de la membrane entre ses deux positions est réalisée à l'aide de moyens pneumatiques, par exemple en exerçant sur elle une pression positive ou une pression négative. Pour réaliser ces dispositifs, les solutions connues sont réalisées par un assemblage multicouche dans lequel la membrane déformable forme une couche intermédiaire prise entre deux substrats. La membrane est souvent collée ou fixée par de l'adhésif double-face prédécoupé. Dans ces documents, les capsules microfluidiques sont intégrées dans des cartes ou cartouches microfluidiques qui possèdent des connecteurs pneumatiques, de façon à être connectés à des sources et régulateurs de pression externes. Après usage, les dispositifs microfluidiques sont déconnectés des sources et régulateurs de pression si bien que les capsules ou vannes pneumatiques intégrées peuvent être dans des états inconnus et ne garantissent pas le scellement des chambres microfluidiques dont des produits pourraient être dispersés. Cet inconvénient est critique lorsque, par exemple, des produits de réactions risquent de polluer l'environnement ou contaminer de futures analyses.

Ces différentes solutions de vannes sont à actionnement pneumatique et nécessitent des moyens externes pour être actionnées qui ne garantissent pas le scellement de chambres de réaction après usage ou même en cas de défaillance électronique ou logicielle.

La demande de brevet EP3326717A1 propose une autre solution dans laquelle la vanne est créée par l'ajout dans une cavité d'un liquide destiné à former un élément en matériau déformable. Dans cette invention la source de pression n'est pas décrite mais la commande par une pluralité de modules et logiciels s'avère complexe et rien ne garantit le scellement des chambres microfluidiques après usage ou encore après un dysfonctionnement.

Le document référencé *"*Closable Valves and Channels for Polymeric Microfluidic Devices » (P. Clark &al, 2020*)"* décrit trois approches originales de vannes de scellement. La première approche consiste en une chambre attenante au canal à fermer où les constituants d'une mousse expansive sont mélangés. La réaction produite par ce mélange provoque l'expansion de la mousse et le scellement du canal. Cette approche permet bien un scellement passif après actionnement de la vanne, mais nécessite en revanche une architecture fluidique complexe pour réaliser le mélange des constituants de la mousse et l'embarquement de ces dits réactifs. De plus, la durée nécessaire à la réaction chimique utilisée est de l'ordre de la dizaine de minutes, ce qui est long en cas de retrait intempestif du dispositif par l'opérateur. Les deux autres approches du document sont basées sur la fonte soit thermique, soit chimique d'une couche de polymère percée d'un trou. C'est par ce trou que le liquide passe lorsque la vanne est ouverte. En chauffant et en appliquant une pression contrôlée sur la couche autour du trou (deuxième approche) ou en déposant un produit chimique à même de dissoudre la couche autour du trou (troisième approche), la couche est localement fondue, le liquide va coalescer et boucher le trou en refroidissant. Dans ces deux approches, les conditions opératoires sont complexes à intégrer à un dispositif. Pour l'approche thermique, il faut en effet atteindre des températures bien supérieures à 100°C, ce qui est peu compatible avec des réactions de types biomoléculaires. Pour l'approche chimique, il est relativement complexe d'intégrer un solvant capable de dissoudre une couche en polymère dans un dispositif principalement en polymère.

La demande de brevet WO2007/044917A2 décrit un mécanisme de vanne fluidique.

Il peut être avantageux de disposer d'une solution de scellement d'une chambre microfluidique, dont l'actionnement est simple et fiable, sans recourir à des moyens complexes.

Par ailleurs, il est peut s'avérer pertinent de disposer d'un composant fluidique intégrant un mécanisme de vanne fluidique, qui soit rapidement déployable sur le terrain.

Un premier but de l'invention est d'abord de proposer un composant fluidique répondant à cette exigence.

Un deuxième but de l'invention est de proposer un dispositif de type vanne fluidique comprenant un tel composant fluidique et disposant de moyens simples et fiables pour l'actionnement du mécanisme de vanne fluidique du composant.

### Exposé de l'invention

L'invention concerne ainsi un dispositif de type vanne fluidique, comportant :
- Un composant fluidique dans lequel est réalisé un circuit fluidique qui comporte un canal fluidique destiné à faire circuler un fluide, ledit canal fluidique comportant au moins un passage pour ledit fluide et une partie évasée formant un emplacement réalisé en périphérie dudit passage, ledit composant comportant également un mécanisme de vanne fluidique comprenant au moins un élément d'actionnement capable de se dilater, piégé par au moins un corps d'un composé fusible dans ledit emplacement,
- Le circuit fluidique comportant une chambre de réaction, le mécanisme de vanne fluidique étant agencé sur un canal fluidique du circuit fluidique débouchant dans ladite chambre de réaction,
- Ledit dispositif comportant :
- Un module de chauffage agencé pour assurer à la fois et de manière simultanée un chauffage de :
   ∘ Ladite chambre de réaction pour réaliser une réaction de détection, et
   ∘ Du mécanisme de vanne fluidique pour dilater l'élément d'actionnement et entraîner une fusion du corps dudit composé fusible de ladite vanne fluidique, en vue d'obtenir un amorçage de ladite vanne.

Selon une particularité, le composé fusible est une paraffine choisie avec une température de fusion comprise entre 42°C et 70°C.

Selon une autre particularité, le composé fusible est une paraffine choisie parmi le docosane, le tricosane, le tetracosane, le pentacosane, l'hexacosane et le dotriacontane.

Selon une autre particularité, l'élément d'actionnement est une bulle de gaz.

Selon une autre particularité, le composant est réalisé sous la forme d'un élément monobloc intégrant ledit circuit fluidique et ledit mécanisme de vanne fluidique.

L'invention concerne également un procédé d'analyse mis en œuvre dans un dispositif tel que défini ci-dessus, ledit procédé consistant à :
- activer le module de chauffage jusqu'à au moins une première valeur de température suffisante pour amorcer ledit mécanisme de vanne fluidique et pour mettre en œuvre une réaction de détection dans ladite chambre de réaction,
- sceller la chambre de réaction par solidification du composé fusible à l'intérieur du canal fluidique.

### Brève description des figures

D'autres caractéristiques et avantages vont apparaître dans la description détaillée qui suit faite en regard des dessins annexés dans lesquels :
- La figure 1 illustre le principe de fonctionnement du dispositif de type vanne fluidique de l'invention, respectivement avec son mécanisme de vanne fluidique à l'état initial, à l'état amorcé et à l'état final.
- La figure 2 montre le dispositif fluidique conforme à l'invention utilisé pour contrôler l'accès fluidique à une chambre de réaction, respectivement lorsque le mécanisme de vanne fluidique est à l'état initial, à l'état amorcé et à l'état final.

### Description détaillée d'au moins un mode de réalisation

Dans la suite de la description, les termes "amont" et "aval" sont à comprendre en tenant compte du sens de circulation du fluide dans le circuit fluidique considéré.

Dans la suite de la description, dans un mécanisme de vanne fluidique, une vanne à l'état ouvert laisse passer le fluide (état 1 ou ON) et une vanne à l'état fermé bloque le passage du fluide (état 0 ou OFF).

L'invention vise notamment un mécanisme de vanne 330 fluidique employé dans un composant 1 fluidique.

Le composant 1 fluidique peut notamment être employé pour une analyse nécessitant un chauffage.

Le composant 1 fluidique peut se présenter sous la forme d'un unique élément monobloc. Cet élément peut être réalisé par la superposition de plusieurs couches.

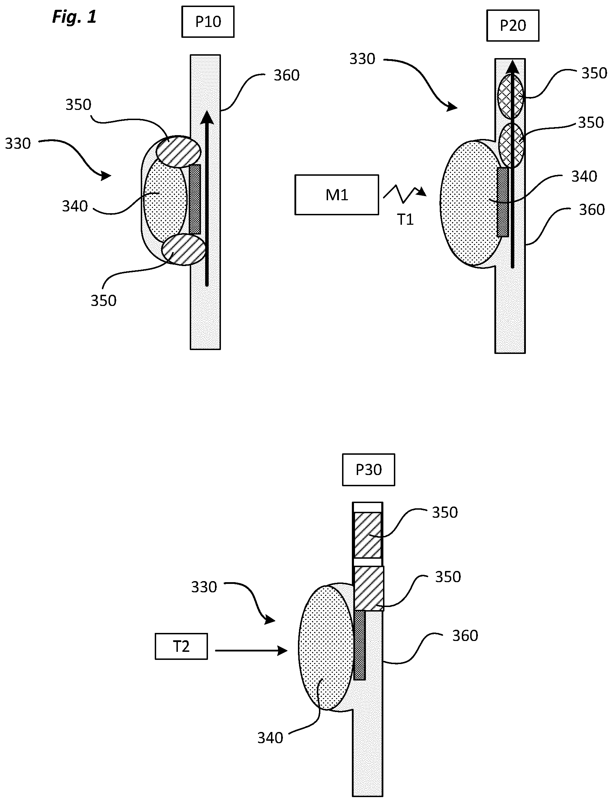

En référence à la figure 1, le mécanisme de vanne 330 fluidique est destiné à être agencé sur un circuit fluidique réalisé dans le composant 1 pour contrôler le passage d'un fluide F dans un canal fluidique de ce circuit fluidique. Le composant 1 embarque tous les organes fluidiques du circuit.

Il faut noter que le mécanisme de vanne 330 fluidique de l'invention dispose d'un fonctionnement irréversible dans le sens qu'elle ne peut venir fermer un canal fluidique qu'une seule fois et qu'elle ne peut pas revenir dans son état initial.

En référence à la figure 1, le mécanisme de vanne 330 fluidique est composé d'au moins un corps 350 (deux corps sur la figure 1) d'un composé fusible, piégeant initialement un élément capable de se dilater, dans le canal 360 du circuit fluidique considéré, par exemple une bulle d'air 340. Les petits volumes de ce composé fusible sont déposés par exemple à la pipette dans des emplacements prévus sur le bord du canal considéré. L'emplacement de la bulle d'air 340 entre les deux corps 350 de composés fusibles dans chaque canal est aussi prévu dans le circuit fluidique. Ces emplacements peuvent être obtenus par exemple par usinage au moyen d'une fraise, ou par gravure laser, ou encore par moulage du circuit. Il faut noter que l'utilisation de deux corps 350 du composé fusible permet notamment d'assurer un meilleur fonctionnement du dispositif lors du scellement mais il faut comprendre que l'invention reste fonctionnelle en utilisant un seul corps 350 de composé fusible. Dans ce dernier cas, la bulle d'air 340 est coincé dans son emplacement par un seul corps 350.

Le composé fusible peut être un alcane linéaire communément appelé paraffine solide, le type de paraffine étant choisi en fonction de la température à laquelle le composé doit fondre lors de la mise en œuvre du procédé. Le mécanisme de vanne 330 fluidique peut notamment se baser en grande partie sur l'utilisation d'une paraffine capable de fondre à une température précise, par exemple le docosane (42-45°C) ou le tetracosane (49-52°C).

Pour amorcer le mécanisme de vanne 330 fluidique, le dispositif de l'invention comporte un module M1 de chauffage. Le module M1 de chauffage est agencé et configuré pour chauffer le composé fusible à une température au moins égale à sa température de fusion.

Le module M1 de chauffage intègre avantageusement une source d'alimentation électrique et utilise un module M2 de contrôle.

Le module M1 de chauffage peut être intégré dans un support sur lequel vient s'adapter ledit composant 1 fluidique, de sorte que le composant 1 se présente sous la forme d'un consommable, facilement remplaçable. Le support est alors un ensemble mécaniquement distinct du composant 1.

En variante, le module M1 de chauffage peut au moins en partie être intégré audit élément formant le composant 1. Dans ce dernier cas, à titre d'exemple, une résistance peut être intégrée au corps du composant 1, ledit composant 1 venant s'adapter sur un support pour connecter ladite résistance à une source d'alimentation électrique externe. Le module M1 de chauffage peut comporter un unique moyen de chauffage électrique ou plusieurs moyens de chauffage électriques. Il peut s'agir par exemple d'une résistance électrique. Si plusieurs moyens sont employés, ils peuvent être tous commandés

Le module M2 de contrôle est configuré pour contrôler le module M1 de chauffage en vue d'ajuster et de réguler la température appliquée.

Selon un aspect particulier de l'invention, il est possible de réaliser une balise entièrement autonome, le module de chauffage M1 pouvant être externe, ou intégré au composant ou assemblé sur celui-ci. Il en est de même pour le module M2 de contrôle.

Le principe de fonctionnement du dispositif est le suivant :
- Au-dessous de sa température de fusion (T1), les deux corps 350 restent piégés sur le bord du canal : le fluide peut circuler librement (figure 1 - P10).
- Au-dessus de sa température de fusion (à la température T1), le deuxième composé fusible formant les deux corps 350 fond, la bulle d'air 340 sous pression du fait de la chaleur peut se dilater en poussant les deux corps 350 fondus dans le canal. Il n'y a pas de pression dans le canal principal autre que la pression hydrostatique, et les bouchons fondus soumis à la poussée d'Archimède et aux forces capillaires restent liquides durant toute la durée du chauffage. Expérimentalement, on observe ainsi une légère remontée des deux corps fondus dans le canal (la paraffine étant moins dense que l'eau), la géométrie de la vanne favorisant cette remontée (figure 1 - P20) dans le canal 360.
- Lors du refroidissement, cette légère remontée des corps 350 est suffisante pour que lors de la contraction de la bulle d'air 340, du liquide venant de la chambre 30 de réaction vienne remplir l'espace disponible, laissant une bonne partie du composé fusible se solidifier dans le canal (figure 1 - P30).

A haute température, c'est-à-dire au-dessus de la température de fusion, en surnageant dans les canaux 360 au-dessus de la chambre 30 de réaction, les corps 350 présents à l'état fondu contribuent pour leur part à limiter l'évaporation du liquide.

A basse température, c'est-à-dire en-dessous de la température de fusion, après le chauffage de la chambre 30 ou encore le cycle de chauffe, le composé fusible revient à l'état solide et les corps 350 scellent complètement les différents canaux.

Le dispositif peut notamment être très utile pour sceller une chambre 30 de réaction, susceptible de subir un cyclage en température pour mettre en œuvre une réaction de détection.

Une telle chambre 30 de réaction peut être intégrée au composant 1 et le mécanisme de vanne 330 fluidique est ainsi employé pour contrôler l'accès fluidique à la chambre 30. Autrement dit, le mécanisme de vanne 330 fluidique est agencé sur un canal 360 d'alimentation fluidique débouchant dans la chambre 30 de réaction. Il faut noter que plusieurs canaux peuvent déboucher dans la chambre 30 de réaction, notamment un autre canal utilisé par exemple dans un circuit fluidique comportant un évent.

Le composé fusible choisi est avantageusement caractérisé par une température de fusion inférieure à la température nécessaire à la réaction de détection, de telle sorte que le mécanisme puisse être amorcé avant toute amplification.

La chambre 30 de réaction est avantageusement réalisée dans le composant 1. Cette chambre 30 de réaction peut embarquer au moins une partie des réactifs nécessaires à la mise en œuvre de la réaction.

La réaction de détection réalisée dans la chambre peut notamment être de type amplification bimoléculaire (PCR, LAMP...) ou être de type immuno-enzymatique (type ELISA).

Il faut noter qu'une analyse par amplification biomoléculaire de microorganismes suppose en général une extraction du matériel génomique des microorganismes. Différentes solutions techniques peuvent bien entendu être mises en œuvre pour cela.

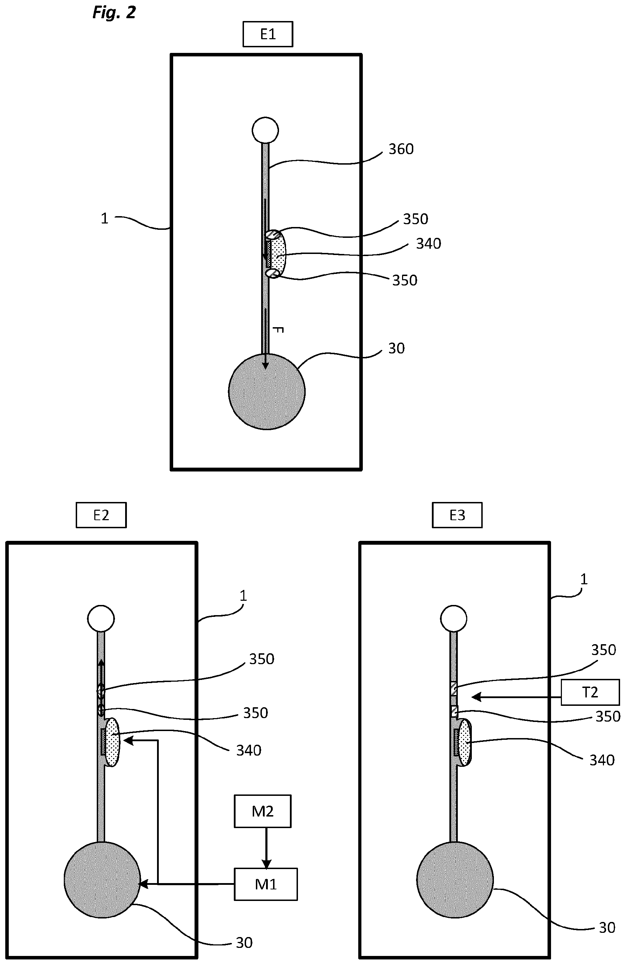

Le principe de fonctionnement est décrit ci-dessous en liaison avec la figure 2.

E1 : Le fluide F peut circuler librement dans le canal 360 fluidique alimentant la chambre 30 de réaction.

E2 : Dans une réaction de détection, la chambre 30 de réaction peut subir un chauffage pour favoriser la réaction. Ce chauffage, mis en œuvre par le module M1 de chauffage, est utilisé pour à la fois favoriser la réaction dans la chambre et pour amorcer le mécanisme de vanne 330 fluidique, selon les principes décrits ci-dessus, en faisant fondre les deux corps 350.

E3 : Lorsque le module M1 de chauffage est ensuite désactivé ou commandé par M2 pour chauffer à une température plus faible (T2), on assiste au refroidissement des corps 350 présents dans le canal 360 fluidique, ceux-ci venant alors obturer le canal 360 pour sceller la chambre 30.

On utilise donc le fait de devoir chauffer la chambre 30 de réaction pour mettre en œuvre la réaction pour également amorcer le mécanisme de vanne 330 fluidique de l'invention, en faisant fondre le composé fusible. Ce principe permet ainsi de mutualiser les moyens employés et présente une sécurité supplémentaire vis-à-vis de la contamination de l'environnement de travail.

La solution de l'invention se démarque des solutions antérieures par le fait qu'elle n'utilise pas de solutions pneumatiques externes pour fonctionner, ni de réactifs supplémentaires à embarquer.

Il faut comprendre que le composant 1 peut bien entendu intégrer d'autres circuits fluidiques.

## Revendications

1. Dispositif de type vanne fluidique, comportant :
- Un composant fluidique dans lequel est réalisé un circuit fluidique qui comporte un canal (360) fluidique destiné à faire circuler un fluide (F), ledit canal (360) fluidique comportant au moins un passage pour ledit fluide (F) et une partie évasée formant un emplacement réalisé en périphérie dudit passage, ledit composant comportant également un mécanisme de vanne fluidique (330) comprenant au moins un élément d'actionnement capable de se dilater, piégé par au moins un corps (350) d'un composé fusible dans ledit emplacement,
- Le circuit fluidique comportant une chambre (30) de réaction, le mécanisme de vanne (330) fluidique étant agencé sur un canal (360) fluidique du circuit fluidique débouchant dans ladite chambre de réaction,
- Ledit dispositif étant **caractérisé en ce qu'**il comporte :
- Un module (M1) de chauffage agencé pour assurer à la fois et de manière simultanée un chauffage de :
∘ Ladite chambre (30) de réaction pour réaliser une réaction de détection, et
∘ Du mécanisme de vanne (330) fluidique pour dilater l'élément d'actionnement et entraîner une fusion du corps (350) dudit composé fusible de ladite vanne (330) fluidique, en vue d'obtenir un amorçage de ladite vanne.

2. Dispositif selon la revendication 1, **caractérisé en ce que** le composé fusible est une paraffine choisie avec une température de fusion comprise entre 42°C et 70°C.

3. Dispositif selon la revendication 2, **caractérisée en ce que** le composé fusible est une paraffine choisie parmi le docosane, le tricosane, le tetracosane, le pentacosane, l'hexacosane et le dotriacontane.

4. Dispositif selon l'une des revendications 1 à 3, **caractérisé en ce que** l'élément d'actionnement est une bulle (340) de gaz.

5. Dispositif selon l'une des revendications 1 à 4, **caractérisé en ce que** le composant est réalisé sous la forme d'un élément monobloc intégrant ledit circuit fluidique et ledit mécanisme de vanne (330) fluidique.

6. Procédé d'analyse mis en œuvre dans un dispositif tel que défini dans l'une des revendications 1 à 5, **caractérisé en ce qu'**il consiste à :
- activer le module (M1) de chauffage jusqu'à au moins une première valeur de température suffisante pour amorcer ledit mécanisme de vanne (330) fluidique et pour mettre en œuvre une réaction de détection dans ladite chambre (30) de réaction,
- sceller la chambre (30) de réaction par solidification du composé fusible à l'intérieur du canal (360) fluidique.
